# FASCICULE DE BREVET EUROPEEN

(11) **EP 3 036 788 B1**
(45) Date de publication et mention de la délivrance du brevet: **30.09.2020**
(21) Numéro de dépôt: 14741273.8
(22) Date de dépôt: 16.07.2014
(51) Int. Cl.: C25B 9/10, C25B 11/03, C25B 13/08, C25B 1/10, C25B 11/04, H01M 8/1004, H01M 8/0247, H01M 4/88, H01M 4/90, H01M 8/0232, H01M 8/1018

(54) **ASSEMBLAGE COUCHE ACTIVE/MEMBRANE POUR DISPOSITIF DE PRODUCTION D'HYDROGÈNE ET ENSEMBLE COMPRENANT LEDIT ASSEMBLAGE ADAPTÉ À UN COLLECTEUR DE COURANT POREUX ET PROCÉDÉ DE FABRICATION DE L'ASSEMBLAGE**
AKTIVE SCHICHT-/MEMBRANANORDNUNG FÜR EINE WASSERSTOFFHERSTELLUNGSVORRICHTUNG, BAUGRUPPE MIT DIESER ANORDNUNG FÜR EINEN PORÖSEN STROMKOLLEKTOR UND VERFAHREN ZUR HERSTELLUNG DER ANORDNUNG
ACTIVE LAYER/MEMBRANE ARRANGEMENT FOR A HYDROGEN PRODUCTION DEVICE AND ASSEMBLY COMPRISING SAID ARRANGEMENT SUITABLE FOR A POROUS CURRENT COLLECTOR AND METHOD FOR PRODUCING THE ARRANGEMENT

(30) Priorité: 23.08.2013 FR 1358143
(43) Date de publication de la demande: 29.06.2016
(73) Titulaire: Commissariat à l'Énergie Atomique et aux Énergies Alternatives, 75015 Paris (FR)
(72) Inventeur: MAYOUSSE, Eric, F-38000 Grenoble (FR); ROZAIN, Caroline, F-84240 La Tour D'aigues (FR)
(74) Mandataire: Esselin, Sophie
(86) Numéro de dépôt international: PCT/EP2014/065303
(87) Numéro de publication internationale: WO 2015/024714

(56) Documents cités:
- WO-A1-02/056404
- CA-A1- 2 780 363
- FR-A1- 2 892 233
- US-A1- 2006 166 074
- US-A1- 2010 086 849
- US-A1- 2010 297 524
- US-A1- 2011 212 386

## Description

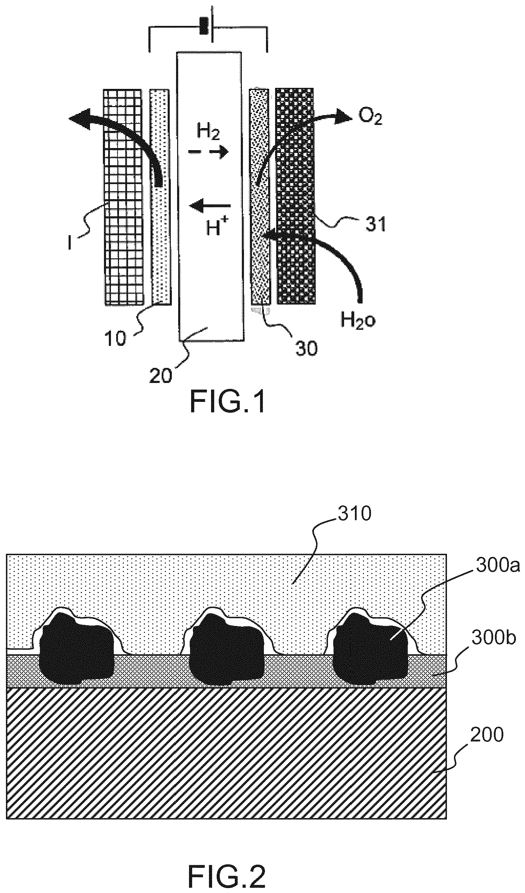

Le domaine de l'invention est celui des dispositifs de production d'hydrogène par électrolyse de l'eau plus particulièrement à basse température avec utilisation de membrane échangeuse de protons (couramment dénommée PEM) dans une cellule telle que celle illustrée en figure 1.

Plus précisément, ce type de cellule est constituée de deux électrodes (anode et cathode, conducteurs électroniques) reliées à un générateur de courant continu, et séparées par un électrolyte (milieu conducteur ionique), pouvant avantageusement comprendre une membrane polymère échangeuse de protons permettant de ne pas avoir recours à un électrolyte liquide, de présenter une grande compacité, de limiter les problèmes de corrosion, et de conduire à des performances sensiblement supérieures.

L'oxygène est produit à l'anode par oxydation de l'eau (E₀ = 1,23 V/ESH) et l'hydrogène est produit à la cathode par réduction du proton (E₀ = 0 V/ESH). Les matériaux anodiques doivent résister à des potentiels élevés (typiquement supérieur à 1,5 V/ESH). Des métaux nobles comme le platine à la cathode ou des oxydes de métaux nobles (iridium, ruthénium, ou des alliages de ces métaux...) à l'anode sont généralement utilisés comme électrocatalyseurs.

Un apport d'énergie au système, permet le déroulement des réactions anodique et cathodique et la production des gaz.

Le cœur d'électrolyseur aussi appelé assemblage membrane électrodes (AME) comprend la membrane échangeuse de protons 20, et les deux couches d'électrocatalyseurs, comme montré par les références 10 et 30 respectivement au niveau de la cathode 11 et de l'anode 31.

L'objectif d'un électrolyseur PEM de l'eau est d'avoir un rendement énergétique le plus élevé possible. En effet, l'objectif est de pouvoir produire les quantités de gaz souhaitées en diminuant la consommation d'énergie (généralement exprimée en kWh Nm⁻³). Cela se traduit par l'obtention d'une tension d'électrolyse la plus faible possible pour un courant donné.

Les composants utilisés dans les couches électrocatalytiques doivent donc catalyser les réactions de réduction du proton (formation d'hydrogène) et d'oxydation de l'eau (formation d'oxygène) se déroulant respectivement à la cathode et à l'anode.

Plusieurs problématiques sont alors identifiées :
- les matériaux utilisés doivent être de bons conducteurs électroniques pour limiter la résistance du système (composée des résistances ohmiques et des résistances interfaciales) ;
- ces matériaux doivent être stables dans les conditions d'électrolyse (milieu acide, stabilité vis-à-vis des potentiels) ;
- les matériaux catalytiques étant généralement des métaux nobles et rares, ils sont donc coûteux et il est important de réduire les quantités utilisées pour rendre viable la technologie d'électrolyse PEM de l'eau.

A la cathode, le platine est en général utilisé pour la production d'hydrogène. Afin de limiter les quantités de platine des cœurs d'électrolyseurs, des supports de carbone (poudres, feuilles etc.) sont utilisés. Ces supports sont très bons conducteurs électroniques et stables dans les conditions cathodiques.

Au niveau de l'anode, comme mentionné précédemment, les matériaux anodiques doivent résister à des potentiels élevés (> 1,5 V/ESH).

Ainsi, l'utilisation de supports carbonés n'est pas envisageable car ceux-ci s'oxydent rapidement (formation de CO₂). Les oxydes de métaux nobles (oxydes d'iridium IrO₂, oxydes bimétalliques etc.) sont majoritairement utilisés dans les anodes d'électrolyseurs PEM car ils sont bons conducteurs électroniques et présentent des propriétés électrocatalytiques intéressantes vis-à-vis de l'électro-oxydation de l'eau mais aussi une bonne stabilité chimique vis-à-vis des potentiels élevés de fonctionnement (2 à 3 V).

De façon générale, ces matériaux sont donc utilisés comme électrocatalyseurs et assurent la bonne conductivité électronique de la couche (pas de support de catalyseur). Néanmoins, comme ils sont généralement denses, pour obtenir des surfaces électroactives suffisantes, les chargements anodiques en matériaux électrocatalytiques sont souvent très élevés, de l'ordre de 2-3 mg cm⁻². Ces oxydes de métaux nobles et rares sont coûteux et il est essentiel de diminuer ces chargements sans toutefois affecter l'activité électrocatalytique et la conduction électronique de l'électrode. Il est à noter qu'en dessous de 0,5 mg cm⁻² de catalyseurs anodiques, la percolation électronique de la couche devient difficile (trop peu de matière). C'est pourquoi des chargements plus importants sont souvent rencontrés.

De nombreuses recherches sont effectuées pour diminuer la quantité de métaux nobles utilisés à l'anode. On peut notamment citer :
- la réalisation de matériaux bi ou trimétalliques composés d'éléments moins nobles mais stables associés à l'iridium ou au ruthénium *(*Xu Wu, Jyoti Tayal, Suddhasatwa Basu, Keith Scott, Nano-crystalline RuxSn1-xO2 powder catalysts for oxygen evolution reaction in proton exchange membrane water electrolysers, International journal of hydrogen energy,36, n° 22, 2011, 14796-14804) *;*
- la recherche de support de catalyseurs (similaire du carbone utilisé à la cathode) : ce support doit être stable chimiquement et bon conducteur électronique. Parmi les supports classiquement rencontrés on peut notamment citer :
   ∘ le suboxyde de titane (TiO₂₋ₓ), notamment décrit dans le brevet US 5 173 215, *« conductive titanium suboxide particulates ».* Sa stabilité est peu étudiée, mais il se ré-oxyde rapidement en TiO₂ non conducteur aux potentiels de fonctionnement utilisés en électrolyse PEM de l'eau ;
   ∘ l'ATO : oxyde d'étain dopé à l'antimoine (Marshall, A.T., Haverkamp, R.G., Electrocatalytic activity of IrO2-RuO2 supported on Sb-doped SnO2 nanoparticles, 2010, Electrochimica Acta 55 (6), pp. 1978-1984*).*

Il est à noter que de tels supports étant peu conducteurs, il est nécessaire d'utiliser de forts chargements en métaux nobles de manière à recouvrir au minimum à 60 % les particules de support.

Les résultats encourageants proposés par ces auteurs ne sont présentés que pour des chargements en catalyseur anodique supérieurs ou égaux à 1 mg cm⁻². Or, pour des chargements supérieurs à 0.5 mg cm⁻², la conduction électronique dans la couche anodique est assurée et les performances évoluent très peu avec le chargement ; le support de catalyseur n'est pas utile dans ces cas là.

Il a également été proposé d'utiliser dans le brevet US2011/0207602 A1 (Nanometer powder catalyst and its preparation method) des nanoparticules d'oxyde de titane comme support de catalyseur pour des applications en électrolyse PEM de l'eau. Les très bonnes performances obtenues avec ce support de catalyseur non conducteur ne s'expliquent que par le fort chargement utilisé (1.24 mg cm⁻² d'IrO₂), les particules de TiO₂ non conductrices sont recouvertes par les particules de métaux nobles.

Pour ce chargement, le support n'a aucun effet puisque la couche active est continue. Ainsi, dans la perspective d'un chargement faible (typiquement inférieur à 0.5 mg/cm²), l'utilisation de ces particules non conductrices est proscrite puisqu'elles doivent assurer la continuité électrique de la couche active.

Il a aussi été décrit dans la publication (J. Polonsky, I.M. Petrushina, E. Christensen, K. Bouzek, C.B. Prag, J.E.T Andersen, N.J. Bjerrum, Tantalum carbide as a novel support material for anode electrocatalyst in polymer electrolyte membrane water electrolysers, International journal of hydrogen energy, 37, n° 3,2012, 2173-2181*)* d'utiliser le TiC comme support de catalyseur pour l'IrO₂. Cependant, le Demandeur a mis en évidence que ce genre de matériau (TiC, TiN, ...) n'est pas stable dans les conditions de l'électrolyse de l'eau ; ils ne présentent d'ailleurs aucun test de durabilité.

Ainsi de nombreux travaux ont porté sur la nature des espèces électrocatalytiques en termes de performances.

Dans ce contexte, le Demandeur s'est intéressé également à l'ensemble constitué par la couche active chargée de catalyseur en contact avec le collecteur de courant présent dans le dispositif de production d'hydrogène, afin d'en améliorer la conduction électrique.

En effet, le collecteur de courant anodique assure le double rôle d'amener l'eau (réactif) au contact de la couche active et d'évacuer le gaz produit (O₂).

Il a déjà été proposé de fabriquer directement l'électrode sur le poreux de titane (Wu, X., Tayal, J. Basu, S. & Scott, K. Nano-crystalline RuxSn1-XO2 powder catalysts for oxygen evolution reaction in proton exchange membrane water electrolyser. International Journal of Hydrogen Energy 36, 14796-14804 (2011)), les résistances de contact catalyseur/collecteur de courant devant s'en trouver améliorées, néanmoins du fait d'un mauvais contact électrique entre le collecteur de courant et la couche active avec l'électrolyte solide, les performances ne sont pas satisfaisantes.

Il existe une littérature abondante dans le domaine de la structuration d'électrodes ou de collecteur de courant et ce pour des domaines divers d'application. Des auteurs ont proposé notamment dans la demande de brevet US 2013/0128412, une forme de collecteur optimisée, cannelé, recouvert par une couche conductrice, permettant d'obtenir de bons contacts électroniques avec la couche active. Une architecture particulière a également été proposée dans la demande de brevet US 2013/0101896, pour améliorer les contacts électriques des connecteurs extérieurs de batterie. Des plots conducteurs ont aussi été produits par oxydation anodique sur un substrat collecteur de courant dans la demande de brevet US 2013/0101902. Le document WO 02/056404 propose une électrode comprenant une couche de diffusion gazeuse avec du carbone fibreux à sa surface, en contact avec une couche active comprenant des particules support en carbone. L'interface entre les particules de carbone diminue la résistance de contact.

Dans le domaine de la présente invention, il a également été proposé des solutions pour améliorer les contacts électriques entre les grilles collectrices de courant et les électrodes.

Pour des applications dans les accumulateurs lithium-ion, des plots de carbone ont été fabriqués sur des grilles de collecteur de courant pour obtenir une plus grande surface de contact avec l'électrode (décrit dans la demande de brevet WO 201361889).

La demande de brevet US 2010/0086849 propose d'intégrer une première partie de l'électrode dans le collecteur du courant en jouant sur le choix de deux tailles de particules de manière à obtenir un contact électrique amélioré dans l'ensemble de l'électrode/collecteur de courant.

Ces deux solutions nécessitent plusieurs étapes de fabrication, la première pour structurer le collecteur de courant, la seconde pour déposer l'électrode. De plus, la solution proposée dans la demande US 2010/0086849, n'est pas compatible avec le domaine de l'invention ; elle ne permet pas de créer un collecteur avec une porosité suffisante pour réaliser un collecteur de courant efficace.

Dans ce contexte, la présente invention propose une solution permettant de fabriquer une couche active anodique capable de s'adapter beaucoup plus intimement à la morphologie du collecteur de courant, et permettant ainsi d'améliorer la conduction électrique et ce avantageusement dans le cas de taux de chargement en catalyseur faible typiquement inférieur à environ 0,5 mg /cm².

Plus précisément, l'invention a pour objet un assemblage couche active/membrane destiné à être intégré dans un dispositif de production d'hydrogène, selon l'objet de la revendication 1, ledit assemblage comportant une couche active en contact avec une membrane susceptible d'échanger des ions, ladite couche active comportant des particules de catalyseur et des particules dites support, caractérisé en ce que la taille des particules support est supérieure à l'épaisseur de ladite couche active, de manière à ce que lesdites particules support sont émergentes de ladite couche active, au niveau de la surface opposée à la surface en contact avec ladite membrane.

Selon une variante, les particules de catalyseur sont des particules à base d'iridium, ou d'oxyde d'iridium.

Selon une variante de l'invention, les particules support sont des particules de titane.

Selon une variante de l'invention, les particules support ont une taille supérieure à 1,2 micron, l'épaisseur de la couche active étant de l'ordre du micron

Selon une variante de l'invention, la membrane est une membrane de tétra-fluoroéthylène sulfoné, type Nafion®.

Selon une variante de l'invention, le taux de chargement en catalyseur de ladite couche active est inférieur à environ 0,3 mg/cm².

L'invention a aussi pour objet un ensemble comprenant un assemblage couche active/membrane selon l'invention, et un collecteur de courant, ledit collecteur de courant présentant des pores, de porosité telle que les particules support émergentes de ladite couche active pénètrent en surface dans les pores dudit collecteur.

Selon une variante de l'invention, le collecteur poreux est un poreux de titane.

Selon une variante de l'invention, le collecteur poreux est un assemblage de grilles.

L'invention a aussi pour objet un procédé de fabrication d'un assemblage selon l'invention, caractérisé en ce qu'il comporte :
- le dépôt d'une couche active comportant des particules de catalyseur et des particules dites support, la taille des particules support étant supérieure à l'épaisseur de ladite couche active, sur ladite membrane.
- l'hydratation de l'assemblage membrane électrode ainsi formé.

Selon une variante de l'invention, la réalisation de ladite couche active comprend la réalisation d'une encre reportée sur ladite membrane, ladite encre comprenant une poudre de particules de catalyseur et des particules support, du tétra-fluoroéthylène sulfoné (Nafion® ) et un mélange d'eau et d'alcool.

Selon une variante de l'invention, le procédé comprend :
- la pulvérisation de l'encre sur un support de tétra-fluoroéthylène (Téflon®) ;
- le transfert par pressage à chaud sur ladite membrane susceptible d'échanger des ions.

L'invention sera mieux comprise et d'autres avantages apparaîtront à la lecture de la description qui va suivre, donnée à titre non limitatif et grâce aux figures annexées parmi lesquelles :
- la figure 1 illustre un dispositif de production d'hydrogène selon l'art connu ;
- la figure 2 illustre un assemblage couche active / membrane selon l'invention ;
- la figure 3 montre une comparaison des tensions de cellules en fonction des densités de courant pour une cellule comprenant un assemblage avec une couche active sans particules support et avec une couche active selon l'invention (chargements en métaux nobles identiques);
- les figures 4a, 4b et 4c illustrent respectivement l'évolution de la tension de cellule des anodes en fonction du chargement en oxyde d'iridium pour des densités de courant de 0,12 A cm⁻² et de 1 A cm⁻² et l'évolution de la résistance ohmique en fonction du chargement en oxyde d'iridium à 80°C ;
- les figures 5a et 5b illustrent l'évolution de la tension de cellule au cours du temps pour des densités de courant de 0,04 A cm⁻² et de 1 A cm⁻² et pour des anodes avec ou sans particules de titane ;
- la figure 6 illustre les valeurs moyennes de l'épaisseur de la couche active en fonction du taux de chargement en oxyde d'iridium pour des anodes avec ou sans particules support de titane ;
- les figures 7a et 7b illustrent l'évolution de la tension de cellule d'un AME en fonction de la densité de courant et l'évolution dans le temps, respectivement avec un assemblage réalisé à sec et avec un assemblage préalablement hydraté.

Dans le contexte de la présente invention, le Demandeur a mis en exergue, l'influence de l'adaptation de l'état de surface de la couche active à celle du collecteur de courant. Pour cela le Demandeur a testé des couches actives à base de particules de catalyseur d'oxyde d'iridium et de particules support en titane. Le Demandeur a pu constater que l'efficacité des électrodes était liée à la répartition de la taille des particules support de titane.

Le Demandeur a ainsi découvert que quand les particules sont intégrées dans la couche active, elles empêchent l'accès des réactifs au catalyseur tandis que les grosses particules dépassent de cette couche active, et permettent par la même d'améliorer les contacts électriques avec le collecteur de courant.

Le Demandeur propose d'exploiter alors une adéquation de taille de particules support avec un collecteur de courant capable de développer une complémentarité d'état de surface entre les particules émergentes support de catalyseur et ledit collecteur de courant.

Pour mettre en évidence ces phénomènes, le Demandeur a analysé par imagerie MEB (microscope électronique à balayage), la surface d'un poreux de titane utilisé comme collecteur de courant et la surface d'une anode à base de catalyseur seul de IrO₂ sans particule de titane au bout de mille heures de fonctionnement.

Il apparait clairement que la surface de l'anode s'adapte à la morphologie du poreux de titane du fait du gonflement de la membrane Nafion dans les pores du collecteur de courant.

Cependant, au vu de la taille des particules du poreux de titane (supérieure à 200 µm), les contacts électriques entre la couche active et le poreux ne sont pas satisfaisants. En effet, la déformation de la couche active anodique est limitée de l'ordre de 10-15 µm : seuls 5 % de la surface des pores du collecteur de courant est utilisée pour la conduction électrique.

C'est pourquoi et selon la présente invention, le Demandeur propose l'assemblage suivant : couche active/membrane, présentant une très bonne complémentarité en termes de surface, avec le collecteur de courant comme illustré en figure 2. La membrane 200 est en contact avec la couche active, ladite couche renfermant des particules support 300a de taille suffisamment élevée pour qu'elles puissent émerger de l'épaisseur de ladite couche active et des particules de catalyseur 300b de petite taille.

La couche active est destinée à être en contact avec le collecteur de courant poreux 310, les particules 300a étant calibrées pour venir s'incorporer partiellement dans les pores dudit collecteur de courant.

Avantageusement mais non de manière limitative, le collecteur de courant peut être un poreux de titane, ledit poreux de titane pouvant être fabriqué en pressant à haute température (frittage) des particules sphériques de titane de tailles identiques.

La couche active est composée de particules de catalyseur de taille de particules pouvant être de l'ordre de 10-50 nm.

La couche active comporte également des particules de titane de taille typiquement supérieure au micron : pouvant être de l'ordre de 1,2 micron à 80 µm, et pouvant préférentiellement être comprise entre 1.2 µm et 10 µm.

Selon l'invention, il est possible d'obtenir de bonnes performances avec un faible taux de chargement en particules onéreuses de IrO₂.

En effet, les diamètres des particules support de titane étant supérieurs à l'épaisseur de la couche active, elles peuvent s'intégrer dans les porosités du collecteur de courant. Les contacts électriques couche active/collecteur de courant sont améliorés, ce qui diminue la tension de cellule à haute densité de courant. De plus, ces grosses particules de titane peuvent agir comme un relai du collecteur de courant, ce qui permet d'améliorer la conduction dans l'épaisseur de la couche active.

A contrario, si les diamètres des particules de titane sont inférieurs à l'épaisseur de la couche active, une partie des particules de titane peut être recouverte par de l'oxyde d'iridium. En fonctionnement, l'accès de l'eau est bloqué par les particules de titane, ce qui implique que les particules d'oxyde d'iridium situées en dessous sont moins actives que celles en contact avec le collecteur de courant. La surface active est réduite et la tension de cellule à basse densité de courant augmente.

Le Demandeur a réalisé des tests comparatifs d'un assemblage destiné à être utilisé dans une cellule électrolytique :
- dans le cas d'une couche active comprenant des particules d'IrO₂ et
- dans le cas d'une couche active comprenant des particules d'IrO₂ et des particules support de titane, selon l'invention, lesdites particules support étant émergentes de la couche active,
et ce pour valider la solution présentée dans la présente demande.

Plus précisément, le Demandeur a étudié l'évolution de la tension de cellule en fonction de la densité de courant et ce dans le cas précis, de taille des particules d'oxyde d'iridium d'environ 15 nm, et de taille de particules support de titane comprises entre 1,24 µm et 40 µm.

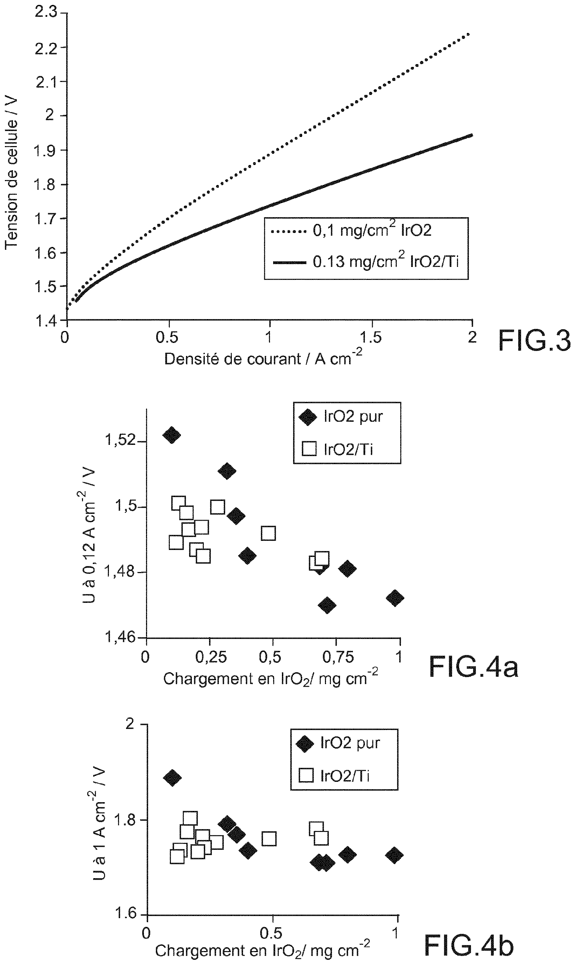

La figure 3 montre une comparaison des courbes de polarisation des AME avec ou sans particules de titane à 80 °C. Plus précisément et afin de mieux mettre en évidence les effets de l'ajout du support de catalyseur sur les performances et de prendre en compte l'ensemble des AME testés (autant avec des anodes d'oxyde d'iridium pur que celles avec le catalyseur supporté), l'évolution de la tension de cellule à faible et haute densités de courant en fonction du chargement en oxyde d'iridium a été tracée sur cette figure 3. Il apparait une tension de cellule plus faible avec la présence de particules support dans la couche active.

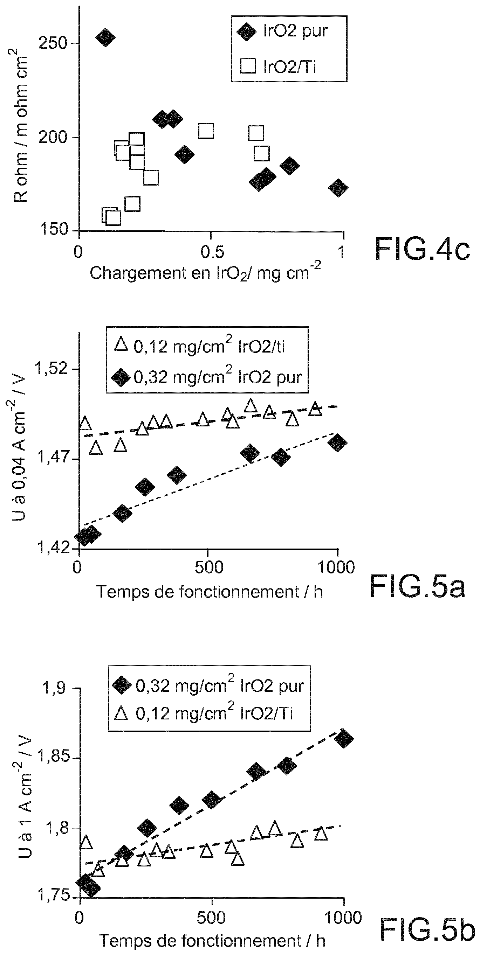

Les figures 4a, 4b et 4c montrent que l'ajout d'un support de catalyseur a un effet positif sur toute la gamme de densité de courant ; la tension de cellule est diminuée par l'ajout du support :
- aux faibles densités de courant (figure 4a) pour les anodes de chargements inférieurs à 0,25 mg cm⁻² IrO₂ (l'origine de ce chargement seuil est expliquée ci-après) ;
- aux fortes densités de courant (figure 4b) pour les anodes de chargements inférieurs à 0,5 mg cm⁻² IrO₂.

Pour de faibles chargements inférieurs au seuil limite de 0,5 mg cm⁻² IrO₂, il n'y a pas assez de particules d'oxyde d'iridium pour obtenir une couche active continue et la résistance de contact entre l'électrode et le collecteur de courant est élevée (figure 4c).

Les particules de titane en jouant un rôle de matériau support conducteur permettent d'améliorer la conduction électronique (figure 4c) et donc de diminuer la tension de cellule à haute densité de courant (figure 4b).

De plus, un plus grand nombre de particules de catalyseur peuvent être traversées par un courant ce qui augmente automatiquement le nombre de sites actifs disponibles pour la réaction de dégagement de l'oxygène et donc permet de diminuer la tension de cellule à faible densité de courant (figure 4a).

Au-delà de cette valeur seuil de 0,5 mg cm⁻² IrO₂, l'ajout de particules de titane a un effet négatif sur les performances à haute densité de courant (figure 4b) qui est expliqué par l'augmentation de la résistance ohmique (figure 4c).

Le Demandeur a également suivi l'évolution de la tension de cellule en fonction du temps pour les deux types de couches actives testées. Les figures 5a et 5b illustrent ainsi l'évolution de la tension au cours du temps respectivement pour des densités de courant de 0,04 A cm⁻² et 1 A cm⁻² pour des anodes avec ou sans particules de titane.

Le Tableau ci-après permet alors de définir les pentes de dégradation pour des densités de courant de 0,04 et 1 A cm⁻² de deux AME avec ou sans particules de titane :

| | Densité de courant | 0,04 A cm⁻² | 1 A cm⁻² |
|---|---|---|---|
| | Chargement anodique (mg cm⁻² IrO₂) | Dégradation (V h⁻¹) | Dégradation (V h⁻¹) |
| IrO₂ pur | 0,32 | 3,6.10⁻⁵ | 11.10⁻⁵ |
| IrO₂/Ti | 0,12 | 1.10⁻⁵ | 2.10⁻⁵ |

On obtient ainsi et avantageusement des pentes plus faibles avec une couche active de l'invention.

Le Demandeur a également opéré des observations au microscope électronique, afin de mettre en relation lesdites observations et les résultats précédemment présentés.

### Sélection d'une taille de particule

Une attention particulière doit être portée à la taille des particules de titane puisqu'elle détermine leurs actions au sein de la couche active :
- si les diamètres des particules de titane sont supérieurs à l'épaisseur de l'électrode, ces particules dépassent de la couche active et vont pouvoir s'intégrer dans les porosités du collecteur de courant. Les contacts électriques couche active/collecteur de courant sont améliorés (figure 4c) ce qui diminue la tension de cellule à plus haute densité de courant (figure 4b). De plus, ces grosses particules de titane agissent comme un relai du collecteur de courant ce qui permet d'améliorer la conduction dans l'épaisseur de la couche active. L'effet de ces particules est donc double : l'amélioration de la conduction surfacique et de la conduction volumique ;
- si les diamètres des particules de titane sont inférieurs à l'épaisseur de l'électrode, une partie des particules de titane peut être recouverte par de l'oxyde d'iridium. L'accès de l'eau est bloqué par les particules de titane, ce qui implique que les particules d'oxyde d'iridium situées en dessous sont moins actives que celles en contact avec le collecteur de courant ; la surface active disponible est réduite et la tension de cellule à basse densité de courant augmente (figure 4a).

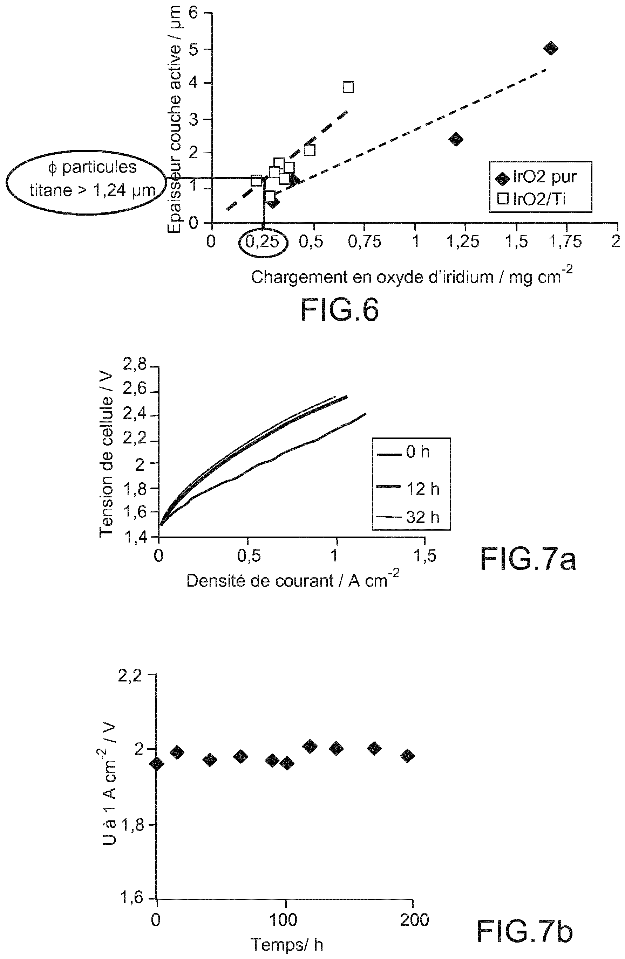

Les coupes des AME réalisées par cryofracture ont permis de mesurer les épaisseurs des couches actives anodiques. La figure 6 présente les valeurs moyennes de ces épaisseurs en fonction du taux de chargement en oxyde d'iridium pour des anodes avec ou sans particules de titane.

Les analyses de dispersion de taille des particules réalisées sur la poudre de titane ont montré que le diamètre des particules est supérieur à 1,24 µm; cela permet de définir une valeur seuil de chargement en dessous de laquelle l'effet des particules de titane est uniquement positif.

Ainsi, pour des chargements en oxyde d'iridium inférieurs à 0,25 mg cm⁻² IrO₂, l'épaisseur des couches actives anodiques d'IrO₂/Ti est inférieure à cette valeur de 1,24 µm et toutes les particules de titane vont dépasser de la couche active et améliorer la conduction surfacique et volumique de l'électrode.

Il est intéressant de noter que cette valeur de chargement a déjà été définie précédemment suite à l'étude des courbes de polarisation.

Le demandeur a ainsi démontré qu'avec un assemblage selon l'invention comportant une couche active avec des particules support de taille suffisamment élevée pour être émergentes de ladite couche active, on obtenait des performances optimales avec les avantages suivants :
- un faible taux de chargement en particules de catalyseur onéreux ;
- une faible tension de cellule ;
- une bonne conductivité ;
- un bon vieillissement.

En effet, le vieillissement de la couche active anodique est caractérisée par l'agglomération et l'augmentation de la taille des particules d'oxyde d'iridium ; l'électrode perd ainsi de sa porosité et devient dense dans toute son épaisseur. Il est intéressant de noter que l'augmentation de la taille des particules est plus importante lorsqu'elles sont en contact avec le collecteur de courant.

Pour des anodes d'oxyde d'iridium pur de très faible chargement (0,32 mg/cm²) le diamètre des particules de catalyseur peut augmenter jusqu'à 100 nm.

Contrairement aux anodes d'oxyde d'iridium pur, on n'observe pas de disparité dans l'augmentation de la taille des particules pour les anodes avec particules de titane. L'électrode présente une structure toujours poreuse et montre que la taille des particules d'oxyde d'iridium est d'environ 25 nm ; cela indique que toutes les particules ont travaillées uniformément.

Les particules de titane jouent ainsi le rôle de relai du collecteur de courant.

### Comparaison d'un assemblage non-hvdraté et d'un assemblage préalablement hydraté avant incorporation dans une cellule :

Les figures 7a et 7b sont relatives à des tests effectués sur des assemblages non préalablement hydraté et préalablement hydraté lors de la conception. Plus précisément, la figure 7a illustre l'évolution de la tension de cellule d'un AME monté sec dans la cellule en fonction de la densité de courant avec une couche active à base de IrO₂/Ti. La tension de cellule se dégrade rapidement au cours du temps. La figure 7b illustre la tension de cellule à 1 A cm⁻² d'un AME avec une anode IrO₂/Ti après une hydratation pendant 12 heures, en montrant la stabilité au cours du temps.

Les figures 7a et 7b mettent ainsi en évidence l'importance de l'hydratation préalable de la membrane avant de la monter dans la cellule. Lorsque l'AME est monté sec dans la cellule, les performances se dégradent très rapidement au bout de seulement quelques heures de tests (figure 7a). Lorsque l'AME est monté dans la cellule après avoir été préalablement hydraté (stationnement dans l'eau désionisée pendant une nuit), les performances restent stables sur plus de 200 heures de tests (figure 7b).

Il est important que les particules de titane puissent se réorganiser dans le volume de la couche active pour s'incruster dans les porosités du collecteur de courant de manière à améliorer les contacts électriques. Cette réorganisation est permise grâce au fait que la membrane est suffisamment hydratée.

Dans le cas contraire, des particules de titane sont présentes en surépaisseur sous le collecteur de courant. La totalité du courant passe par ces quelques points et provoque l'oxydation des particules de titane ; cela augmente la résistance ohmique totale du système et les performances se dégradent au cours du temps.

### Exemple de réalisation d'un assemblage selon l'invention :

Lors d'une première opération on réalisé une encre. Pour cela, les poudres de catalyseur et de particules support sont dispersées dans un solvant eau désionisée et isoprapopanol et 10% en masse de ionomère pouvant être du Nation®.

Lors d'une seconde opération, l'encre est pulvérisée sur un support de Téflon® et transférée par pressage à chaud sur une membrane Nafion® correspondant à la membrane échangeuse d'ions.

On peut ainsi réaliser une anode composée d'une couche active catalytique comportant des particules d'oxyde d'iridium et des particules de titane pressée sur une membrane Nafion®, et qui sera mise en contact avantageusement avec un poreux de titane, collecteur de courant.

## Revendications

1. Assemblage couche active/membrane destiné à être intégré dans un dispositif de production d'hydrogène, ledit assemblage comportant une couche active en contact avec une membrane susceptible d'échanger des ions, ladite couche active comportant des particules de catalyseur et des particules conductrices électroniques dites support, **caractérisé en ce que** la taille des particules support est supérieure à l'épaisseur moyenne de ladite couche active, de manière à ce que lesdites particules support émergent au niveau d'une surface de ladite couche active, ladite surface de ladite couche active étant opposée à la surface de ladite couche active en contact avec ladite membrane.

2. Assemblage couche active/membrane selon la revendication 1, **caractérisé en ce que** les particules de catalyseur sont des particules à base d'iridium, ou d'oxyde d'iridium.

3. Assemblage couche active/membrane selon l'une des revendications 1 ou 2, **caractérisé en ce que** les particules support sont des particules de titane.

4. Assemblage couche active/membrane selon l'une des revendications 1 à 3, **caractérisé en ce que** les particules support ont une taille supérieure à 1,2 micron, l'épaisseur de la couche active étant de l'ordre du micron.

5. Assemblage couche active/membrane selon l'une des revendications 1 à 4, **caractérisé en ce que** la membrane est une membrane de tétra-fluoroéthylène sulfoné.

6. Assemblage couche active/membrane selon l'une des revendications 1 à 4, **caractérisé en ce que** le taux de chargement en catalyseur de ladite couche active est inférieur à environ 0,3 mg/cm².

7. Ensemble comprenant un assemblage couche active/membrane selon l'une des revendications 1 à 6 et un collecteur de courant, ledit collecteur de courant présentant des pores, de porosité telle que les particules support émergentes de ladite couche active pénètrent en surface dans les pores dudit collecteur.

8. Ensemble selon la revendication 7, **caractérisé en ce que** le collecteur de courant est un poreux de titane.

9. Ensemble selon la revendication 7, **caractérisé en ce que** le collecteur poreux est un assemblage de grilles.

10. Procédé de fabrication d'un assemblage selon l'une des revendications 1 à 6, **caractérisé en ce qu'**il comporte :
- le dépôt d'une couche active comportant des particules de catalyseur et des particules dites support, la taille des particules support étant supérieure à l'épaisseur de ladite couche active, sur ladite membrane.
- l'hydratation de l'assemblage membrane /électrode ainsi formé.

11. Procédé de fabrication d'un assemblage selon la revendication 10, **caractérisé en ce que** la réalisation de ladite couche active comprend la réalisation d'une encre reportée sur ladite membrane, ladite encre comprenant une poudre de particules de catalyseur et des particules support, du tétra-fluoroéthylène sulfoné et un mélange d'eau et d'alcool.

12. Procédé de fabrication d'un assemblage selon la revendication 11, **caractérisé en ce qu'**il comprend :
- la pulvérisation de l'encre sur un support de tétra-fluoroéthylène ;
- le transfert par pressage à chaud sur ladite membrane susceptible d'échanger des ions.

## Patentansprüche

1. Aktive Schicht-/Membrananordnung, dazu bestimmt, in eine Wasserstoffherstellungsvorrichtung eingebaut zu werden, wobei die Anordnung eine aktive Schicht in Kontakt mit einer Membran umfasst, welche zum Ionentausch fähig ist, wobei die aktive Schicht Katalysatorpartikel und leitfähige elektronische Partikel, genannt Trägerpartikel, umfasst, **dadurch gekennzeichnet, dass** die Größe der Trägerpartikel größer als die mittlere Dicke der aktiven Schicht ist, sodass die Trägerpartikel auf Höhe einer Oberfläche der aktiven Schicht austreten, wobei die Oberfläche der aktiven Schicht der Oberfläche der aktiven Schicht in Kontakt mit der Membran gegenüberliegt.

2. Aktive Schicht-/Membrananordnung nach Anspruch 1, **dadurch gekennzeichnet, dass** die Katalysatorpartikel Partikel auf der Basis von Iridium oder Iridiumoxid sind.

3. Aktive Schicht-/Membrananordnung nach einem der Ansprüche 1 oder 2, **dadurch gekennzeichnet, dass** die Trägerpartikel Titanpartikel sind.

4. Aktive Schicht-/Membrananordnung nach einem der Ansprüche 1 bis 3, **dadurch gekennzeichnet, dass** die Trägerpartikel eine Größe von mehr als 1,2 Mikrometer aufweisen, wobei die Dicke der aktiven Schicht in der Größenordnung von einem Mikrometer liegt.

5. Aktive Schicht-/Membrananordnung nach einem der Ansprüche 1 bis 4, **dadurch gekennzeichnet, dass** die Membran eine Membran aus sulfoniertem Tetrafluorethylen ist.

6. Aktive Schicht-/Membrananordnung nach einem der Ansprüche 1 bis 4, **dadurch gekennzeichnet, dass** der Katalysatorfüllfaktor der aktiven Schicht weniger als ungefähr 0,3 mg/cm² beträgt.

7. Einheit, umfassend eine aktive Schicht-/Membrananordnung nach einem der Ansprüche 1 bis 6 und einen Stromsammler, wobei der Stromsammler Poren mit einer derartigen Porosität aufweist, dass die aus der aktiven Schicht austretenden Trägerpartikel an der Oberfläche in die Poren des Sammlers eindringen.

8. Anordnung nach Anspruch 7, **dadurch gekennzeichnet, dass** der Stromsammler ein poröses Material aus Titan ist.

9. Anordnung nach Anspruch 7, **dadurch gekennzeichnet, dass** der poröse Sammler eine Gitteranordnung ist.

10. Herstellungsverfahren einer Anordnung nach einem der Ansprüche 1 bis 6, **dadurch gekennzeichnet, dass** es folgende Schritte umfasst:
- Ablagern einer aktiven Schicht, welche Katalysatorpartikel und sogenannte Trägerpartikel umfasst, wobei die Größe der Trägerpartikel größer als die Dicke der aktiven Schicht ist, auf der Membran.
- Hydrierung der so gebildeten Membran-/Elektrodenanordnung.

11. Herstellungsverfahren einer Anordnung nach Anspruch 10, **dadurch gekennzeichnet, dass** die Herstellung der aktiven Schicht die Herstellung einer auf die Membran übertragenen Tinte umfasst, wobei die Tinte ein Katalysatorpartikelpulver und Trägerpartikel, sulfoniertes Tetrafluorethylen und eine Mischung aus Wasser und Alkohol umfasst.

12. Herstellungsverfahren einer Anordnung nach Anspruch 11, **dadurch gekennzeichnet, dass** es folgende Schritte umfasst:
- Zerstäubung der Tinte auf einem Tetrafluorethylen-Träger;
- Press-Wärmetransfer auf die zum Ionentausch fähige Membran.

## Claims

1. An active layer/membrane assembly intended to be incorporated into a hydrogen production device, said assembly comprising an active layer in contact with a membrane capable of exchanging ions, said active layer comprising catalyst particles and conductive electronic particles referred to as support particles, **characterized in that** the size of the support particles is greater than the average thickness of said active layer, so that said support particles emerge at a surface of said active layer, said surface of said active layer being opposite to the surface of said active layer in contact with said membrane.

2. The active layer/membrane assembly according to claim 1, **characterized in that** the catalyst particles are particles based on iridium, or on iridium oxide.

3. The active layer/membrane assembly according to one of claims 1 or 2, **characterized in that** the support particles are titanium particles.

4. The active layer/membrane assembly according to one of claims 1 to 3, **characterized in that** the support particles have a size of greater than 1.2 micron, the thickness of the active layer being of the order of the micron.

5. The active layer/membrane assembly according to one of claims 1 to 4, **characterized in that** the membrane is a membrane of sulfonated tetrafluoroethylene.

6. The active layer/membrane assembly according to one of claims 1 to 4, **characterized in that** the degree of catalyst loading of said active layer is less than around 0.3 mg/cm².

7. A unit comprising an active layer/membrane assembly according to one of claims 1 to 6 and a current collector, said current collector having pores, with a porosity such that the support particles emerging from said active layer penetrate at the surface into the pores of said collector.

8. The unit according to claim 7, **characterized in that** the current collector is a porous titanium material.

9. The unit according to claim 7, **characterized in that** the porous collector is an assembly of grids.

10. A process for manufacturing an assembly according to one of claims 1 to 6, **characterized in that** it comprises:
- the deposition of an active layer comprising catalyst particles and particles reffered to as support particles, the size of the support particles being greater than the thickness of said active layer, on said membrane;
- the hydration of the membrane/electrode assembly thus formed.

11. The process for manufacturing an assembly according to claim 10, **characterized in that** the production of said active layer comprises the production of an ink added to said membrane, said ink comprising a powder of catalyst particles and support particles, sulfonated tetrafluoroethylene and a mixture of water and alcohol.

12. The process for manufacturing an assembly according to claim 11, **characterized in that** it comprises:
- the spraying of the ink onto a tetrafluoroethylene support;
- the transfer by hot pressing onto said membrane capable of exchanging ions.
